# EUROPÄISCHE PATENTSCHRIFT

(11) **EP 2 924 313 B1**
(45) Veröffentlichungstag und Bekanntmachung des Hinweises auf die Patenterteilung: **04.04.2018**
(21) Anmeldenummer: 14004343.1
(22) Anmeldetag: 20.12.2014
(51) Int. Cl.: F16D 65/12, F16D 66/02

(54) **Bremsscheibe für ein Fahrzeug mit einem Verschleißindikator**
Brake disk for a vehicle with a wear indicator
Disque de frein pour un véhicule doté d'un indicateur d'usure

(30) Priorität: 19.03.2014 DE 102014003986
(43) Veröffentlichungstag der Anmeldung: 30.09.2015
(73) Patentinhaber: MAN Truck & Bus AG, 80995 München (DE)
(72) Erfinder: Butz, Matthias, 80687 München (DE); Orgler, Florian, 80335 München (DE)
(74) Vertreter: v. Bezold & Partner Patentanwälte - PartG mbB

(56) Entgegenhaltungen:
- DE-A1-102010 037 382
- DE-T2- 69 300 968
- US-A1- 2013 299 284

## Beschreibung

Die Erfindung betrifft eine Fahrzeugbremsscheibe mit einem Verschleißindikator.

Bei einem Fahrzeug wird aufgrund der hohen Anforderungen an sicherheitsrelevante Bauteile in regelmäßigen Abständen die Bremsscheibendicke gemessen, so dass die Bremsscheibe rechtzeitig gewechselt werden kann. Bei zu geringer Bremsscheibendicke besteht die Gefahr von Hitzerissen und in deren Folge die Gefahr von starkem Verschleiß der Bremsbeläge bis hin zum Versagen der Bremsscheibe durch einen Riss. Um einen verfrühten Wechsel der Bremsscheibe und unnötige Werkstattaufenthalte zu vermeiden, ist es ferner notwendig, die noch verfügbare Restlaufzeit feststellen zu können. Bei Nutzfahrzeugen erfordert dieser Messvorgang üblicherweise eine Grube bzw. eine Demontage der Räder, was jedoch zeitaufwändig ist. Auch kann sie von einem Laien nur schwer selbstständig durchgeführt werden.

Aus der Praxis ist es bekannt, zum Messen des Bremsscheibenverschleißzustandes bzw. der Bremsscheibendicke üblicherweise Mikrometerschrauben zu verwenden. Dies ist nötig, da am äußeren Rand der Bremsscheibe häufig ein Grat stehen bleibt, der es nicht erlaubt eine Lehre oder einen gewöhnlichen Messschieber zu verwenden.

Aus dem Stand der Technik ist es ferner bekannt, Verschleißmerkmale, nachfolgend auch als Verschleißindikatoren bezeichnet, in der Bremsscheibenreibfläche in Form einer Aussparung, Tasche, Nut, Bohrung oder Fase vorzusehen. Hierbei sind unterschiedliche Ausführungsvarianten bekannt, die nach drei Aspekten unterschieden werden können:
Gemäß einem ersten Aspekt sind Varianten bekannt, bei denen die Verschleißmerkmale mit zunehmendem Verschleiß in Erscheinung treten und bei Endverschleiß in vollem Umfang zu sehen sind, vgl. EP 1 108 918 B1. Ferner sind Varianten bekannt, bei denen die Verschleißmerkmale mit zunehmendem Verschleiß verschwinden und bei Endverschleiß nicht mehr zu sehen sind, vgl. DE 10 2005 032 638 A1.

Gemäß einem zweiten Aspekt sind Verschleißmerkmale bekannt, die lediglich den Endverschleißzustand markieren, vgl. US 6,457,566 B1, und Verschleißmerkmale, welche ein kontinuierliches Ablesen des Verschleißzustandes ermöglichen, vgl. US 2013/0299284 A1. Die aus der Offenlegungsschrift US 2013/0299284 A1 bekannte Bremsscheibe verfügt dabei über Vertiefungen mit unterschiedlichen Durchmessern, die in die Rückseite des Reibrings eingebracht sind. Mit zunehmendem Verschleiß werden diese aufgedeckt und können dann aber nur mit Hilfe einer Messlehre in Bremsscheibenverschleiß interpretiert werden.

Gemäß einem dritten Aspekt sind Varianten bekannt, bei denen Verschleißmerkmale über den Umfang verteilt sind, um eine bessere Sicht darauf zu gewährleisten, bzw. bei denen zusätzlich mehrere Merkmale vorgesehen sind, die auf der Bremsscheibe radial verteilt sind, um einen radialen oder konkaven Schrägverschleiß feststellen zu können, vgl. EP 1 108 918 B1.

Die beschriebenen Verschleißmerkmale stellen meist jedoch nur eine "Schwarz-Weiß"-Anzeige dar, d. h. bei einem vollständigen Verschwinden des Verschleißmaßes kann von einem Erreichen eines definierten Grenzwertes an der entsprechenden Stelle der Bremsscheibe ausgegangen werden. Zwischenzustände und das kontinuierliche Fortschreiten des Verschleißes sind, wie in US 2013/0299284 A1 beschrieben, jedoch nur mit einem zusätzlichen Messwerkzeug als Referenz feststellbar, welches zudem einen direkten Zugang zur Bremsscheibe erfordert.

Aus der DE 10 2010 037 382 A1 ist zur Ausbildung eines Verschleißindikators bekannt, in eine Ausnehmung einer Bremsscheibe einen Einsatz aus Kupfer einzupressen, der zunächst gestuft erweitert und dann nach außen kegelspitzartig verjüngt ist. Bei einer unbenutzten Bremsscheibe ist der Einsatz grünlich verfärbt und wird durch Abnutzung angeschliffen, so dass ein rötlicher Punkt in einem grünen Ring sichtbar wird, dessen Durchmesser mit fortschreitender Abnutzung zunimmt. Nachteilig hierbei ist die aufwändige Herstellung. Ferner ist aus der DE 693 00 968 T2 bekannt, an einem Umfangsabschnitt einer Bremsscheibe eine in radialer Richtung offene Aussparung vorzusehen, die sich in axialer Richtung öffnet, wenn die Dicke der Scheibe zwischen den Reibungsbahnen kleiner als ein vorbestimmter Wert ist.

Es ist somit eine Aufgabe der Erfindung, eine Bremsscheibe mit einem verbesserten Verschleißindikator bereitzustellen, mit dem Nachteile herkömmlicher Techniken vermieden werden können. Die Aufgabe der Erfindung ist es insbesondere, Verschleißmerkmale an Bremsscheiben bereitzustellen, die ein zuverlässigeres Überwachen des Bremsscheibenverschleißes ermöglichen, ohne auf weitere Hilfsmittel angewiesen zu sein und ohne Räder demontieren zu müssen. Ferner sollen Bremsscheiben mit derartigen Verschleißindikatoren kostengünstig herzustellen sein.

Diese Aufgaben werden durch eine Bremsscheibe mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Bremsscheibe weist eine visuell erkennbare Verschleißanzeige auf, umfassend einen Verschleißindikator, der in eine Bremsfläche der Bremsscheibe eingebracht und so ausgeführt ist, dass sich dessen Erscheinung in Draufsicht auf die Bremsfläche über eine abnehmende Verschleißhöhe ändert. Unter abnehmender Verschleißhöhe wird die mit zunehmendem Verschleiß abnehmende Dicke der Bremsfläche, auch als Reibfläche oder Reibring bezeichnet, der Bremsscheibe verstanden.

Die Bremsscheibe bzw. die visuell erkennbare Verschleißanzeige umfasst ferner einen Referenzindikator, der in die Bremsfläche der Bremsscheibe eingebracht und so ausgeführt ist, dass sich dessen Erscheinung in Draufsicht auf die Bremsfläche über die abnehmende Verschleißhöhe nicht ändert oder relativ zur Änderung des Verschleißindikators in vorgegebener Weise unterschiedlich ändert, so dass ein Verschleißfortschritt, insbesondere ein kontinuierlicher Verschleißfortschritt, aus der Erscheinung des Verschleißindikators in Relation zu der Erscheinung des Referenzindikators ablesbar ist.

Ein besonderer Vorzug der Erfindung liegt darin, dass der Fortschritt des Verschleißes anhand des in Draufsicht auf die Bremsfläche sichtbaren relativen Erscheinungsbildes des Verschleißindikators und des Referenzindikators ohne weitere Hilfsmittel, wie Messschieber etc. bestimmbar ist, d. h. visuell und ohne zur Hilfenahme weiterer Messgeräte oder dergleichen ablesbar ist.

Der Verschleißindikator und der Referenzindikator können so ausgeführt sind, dass sich eine in Draufsicht auf die Bremsfläche sichtbare Lage, Form, und/oder Abmessung des Verschleißindikators relativ zu einer sichtbaren Lage, Form, und/oder Abmessung des Referenzindikators über die abnehmende Verschleißhöhe in vorgegebener Weise ändern.

Gemäß allgemeinen Gesichtspunkten der Erfindung ist der Verschleißindikator so ausgeführt, dass sich mit dem abnehmenden Merkmal des Verschleißes mindestens ein weiteres Maß des Verschleißindikators in der Draufsicht verändert und zu einer Änderung der Merkmalserscheinung führt. Beispielsweise kann der Verschleißindikator so gewählt werden, dass sich beispielsweise eine Breite, eine Länge, ein Radius und/oder eine Bogenlänge des Verschleißindikators über die abnehmende Verschleißhöhe ändert.

Geometrisch stellt dieses weitere Maß somit eine nicht konstante Funktion der Höhe des Verschleißindikators dar. Dies können Formen wie z. B. Rampen oder Trichter sein, deren Breite bzw. Länge sich über die Verschleißhöhe ändert. Alternativ kann eine kegelförmige Ausnehmung gewählt werden, bei der sich der Radius über die Höhe ändert. Ein anderes Beispiel stellen Helixformen dar, bei denen sich die Bogenlänge über die Verschleißhöhe ändert. Die Ableitung dieser Funktion und somit die Steigung des sich verändernden Parameters kann z. B. linear oder parabolisch sein.

Eine Erscheinung des Verschleißindikators in Draufsicht auf die Bremsfläche ist somit nicht auf eine bestimmte Form beschränkt. Die Form in Draufsicht kann z. B. gerade oder gebogen sein.

Wie vorstehend erwähnt, besteht im Rahmen der Erfindung die Möglichkeit, den Referenzindikator so auszuführen, dass sich dessen Erscheinung in Draufsicht auf die Bremsfläche über die abnehmende Verschleißhöhe nicht ändert, beispielsweise durch Einbringen einer Vertiefung in die Bremsfläche mit konstantem Querschnitt in Verschleißrichtung. Alternativ kann der Referenzindikator so ausgeführt werden, dass sich dessen Erscheinung in Draufsicht auf die Bremsfläche über die abnehmende Verschleißhöhe relativ zur Änderung des Verschleißindikators in vorgegebener Weise unterschiedlich ändert, d.h. die Erscheinung des Referenzindikators ändert sich mit einem anderem Maß als der Verschleißindikator selbst.

In diesem Fall wird das Maß einer nicht konstanten Funktion der Höhe des Referenzindikators so gewählt, dass die jeweils sichtbare Lage, Form, und/oder Abmessung des Referenzindikators einen proportionalen Bezugspunkt bzw. fiktive Nullstellung angibt, relativ zum dem die sichtbare Lage, Form, und/oder Abmessung des Verschleißindikators verglichen werden kann, um den relativen Verschleißfortschritt abzulesen.

Gemäß einem weiteren Aspekt kann eine Form und Orientierung des Referenzindikators so ausgeführt sein, dass sie einer Form und Orientierung des Verschleißindikators in Draufsicht auf die Bremsfläche entspricht. Dagegen ändert sich die Länge des Verschleißindikators zumindest in einer Richtung entlang der Bremsfläche mit zunehmendem Verschleiß. Ferner kann gemäß dieser Variante der Referenzindikator angrenzend zu oder in unmittelbarer Nähe zu dem Verschleißindikator angeordnet sein. Gemäß dieser Variante kann der Referenzindikator so ausgebildet sein, dass eine Erscheinung in Draufsicht auf die Bremsfläche über eine abnehmende Verschleißhöhe unverändert ist.

Gemäß diesem Aspekt kann die Erscheinung des Verschleißindikators und Referenzindikators im Neuzustand der Bremsscheibe im Wesentlichen gleich sein, wobei sich mit zunehmendem Verschleiß nur die Erscheinung des Verschleißindikators schrittweise ändert, so dass in jedem Verschleißzustand durch Vergleich der aktuellen Erscheinung des Verschleißindikators zur Erscheinung des Referenzindikators ein visuell einfach zu erkennendes Maß für den Fortschritt des Verschleißprozesses bereitgestellt wird.

Gemäß einer weiteren Ausführungsform kann der Referenzindikator in Form einer Erhebung, Ausnehmung oder Kante ausgebildet sein, die über die abnehmende Verschleißhöhe sichtbar bleibt. Ferner ist der Referenzindikator gemäß dieser Variante an einer Stelle der Bremsfläche angeordnet, an der der Referenzindikator im Neuzüstand der Bremsscheibe sich angrenzend zu oder in unmittelbarer Nähe zu einem Bereich, z. B. einem Endbereich, des Verschleißindikators befindet, wobei der Bereich seine Lage mit abnehmender Verschleißhöhe ändert, d. h. dieser Bereich definiert eine sichtbare wandernde Verschleißmarke auf der Bremsfläche. Der jeweilige Abstand zwischen dem wandelnden Endbereich des Verschleißindikators und der ortsfesten Erhebung, Ausnehmung oder Kante des Referenzindikators stellt somit ein visuell einfach zu erkennendes Maß für den Verschleißfortschritt dar. Der Referenzindikator beschreibt somit durch seine Form und Lage die Startposition der durch den Verschleiß wandernden Verschleißmarke.

Besonders vorteilhaft ist, wenn eine derartige Erhebung, Ausnehmung oder Kante an beiden Endbereichen des Verschleißindikators vorgesehen ist.

Der Verschleißindikator kann als rampenförmige Ausnehmung gebildet sein, und der Referenzindikator kann als nutförmige Ausnehmung gebildet sein, die parallel und benachbart zu der rampenförmigen Ausnehmung verläuft. Eine solche Ausnehmung wird nachfolgend auch als Vertiefung bezeichnet. Vorzugsweise ist eine Tiefe der nutförmigen Ausnehmung in Verschleißrichtung mindestens so groß wie die maximale Tiefe der nutförmigen Ausnehmung. Diese stellt sicher, dass der Referenzindikator auch im maximalen Verschleißzustand des Verschleißindikators noch sichtbar ist. Gemäß einem weiteren Aspekt dieser Ausführungsvariante können die rampenförmige Ausnehmung und die nutförmige Ausnehmung im Neuzustand der Bremsscheibe an einer gleichen Anfangsstelle beginnen und an einer gleichen Endstelle enden. Unter einem parallelen Verlauf der rampenförmigen und der nutförmigen Ausnehmung wird bei gekrümmtem Verlauf der Ausnehmung ein Verlauf mit gleicher Krümmung verstanden, z. B. bei kreisbogenförmigem Verlauf der rampenförmigen Ausnehmung ist die nutförmige Ausnehmung konzentrisch zu dieser angeordnet. Die nutförmige Ausnehmung kann insbesondere mit konstanter Tiefe ausgeführt sein.

Gemäß einer alternativen Ausführungsvariante ist der Verschleißindikator als rampenförmige Ausnehmung gebildet, der Referenzindikator ist als Ausnehmung gebildet, die unter einem Winkel zwischen 0° und 180°, z. B. rechtwinklig, und benachbart zur der rampenförmigen Ausnehmung angeordnet ist, und die rampenförmige Ausnehmung und die Ausnehmung beginnen im Neuzustand der Bremsscheibe an einer gleichen Anfangsstelle. Beispielsweise kann das Referenzmerkmal somit T- oder L-förmig zum Verschleißmerkmal angeordnet sein. Gemäß dieser Ausführungsvariante kann eine Tiefe der Ausnehmung in Verschleißrichtung vorzugsweise wiederum mindestens so groß ausgeführt sein wie die maximale Tiefe der rampenförmigen Ausnehmung, was jedoch nicht zwingend ist.

Gemäß einem weiteren Ausführungsbeispiel kann der Verschleißindikator als trichterförmige Ausnehmung ausgeführt sein, und der Referenzindikator kann durch zwei Vertiefungen, beispielsweise in Form von Bohrungen, ausgeführt sein. Hierbei ist eine Tiefe der Vertiefungen vorzugsweise mindestens so groß wie die maximale Tiefe der trichterförmigen Ausnehmung. Diese stellt wiederum sicher, dass der Referenzindikator auch im maximalen Verschleißzustand des Verschleißindikators noch sichtbar ist.

Ferner sind die langlochförmigen Vertiefungen im Neuzustand der Bremsscheibe angrenzend zu oder in unmittelbarer Nähe zu gegenüberliegenden Randbereichen der trichterförmigen Ausnehmungen angeordnet. Unter einer trichterförmigen Ausnehmung im Sinne dieser Erfindung wird insbesondere auch eine schlitzförmige Öffnung an der Bremsfläche verstanden, die sich in Verschleißrichtung trichterförmig verjüngt. Die langlochförmigen Vertiefungen markieren somit die ursprüngliche Abmessung des Verschleißindikators im Neuzustand, so dass der mit zunehmendem Verschleiß größer werdenden Abstand des Randbereichs der trichterförmigen Ausnehmung zu der langlochförmigen Vertiefung ein Maß über den Verschleiß darstellt.

Insbesondere kann die Bremsscheibe so ausgelegt sein, dass, wenn die zwischen dem langlochförmigen Vertiefungen angeordnete trichterförmige Vertiefung kaum noch oder nicht mehr sichtbar ist, ein maximaler Verschleißzustand erreicht ist, der dem Fahrer oder einer anderen Person anzeigt, dass die Bremsscheibe gewechselt werden sollte.

Gemäß einer weiteren Ausführungsvariante kann der Verschleißindikator als helixförmige Ausnehmung ausgeführt sein, wobei eine Bogenlänge der helixförmigen Ausnehmung auf der Bremsfläche mit abnehmender Verschleißhöhe abnimmt. Der Ausbildung des Verschleißindikators als helixförmige Ausnehmung hat den Vorteil, dass die verschleißbedingte Änderung des Verschleißindikators eine Selbstreferenzierung ermöglicht. So ist beispielsweise aus der aktuellen Bogenlänge die ursprüngliche Bogenlänge im Neuzustand ableitbar, so dass der Referenzindikator als Teil des Verschleißindikators ausgebildet sein kann.

Folglich kann als Referenzindikator ein Merkmal der helixförmigen Ausnehmung, das ein Maß für ursprüngliche Bogenlänge im Neuzustand ist, als Referenzindikator verwendet werden. Ein Beispiel hierfür ist eine radiale Kante der helixförmigen Ausnehmung, deren Lage mit abnehmender Verschleißhöhe unverändert ist. Alternativ kann auch die ursprüngliche Bogenlänge im Neuzustand (bzw. die auf die Bremsfläche projizierte Bogenlänge im Neuzustand) selbst als Referenzindikator herangezogen werden, wenn die Bogenlänge im Neuzustand fest vorgegeben wird, da diese aus der aktuellen (Rest-)Bogenlänge ableitbar ist.

Alternativ kann der ursprüngliche Mittelpunktswinkel des Kreisbogens verwendet werden, der durch Projizierung der Bogenlänge auf die Bremsfläche entsteht. Mit einer verschleißbedingt abnehmenden Bogenlänge der helixförmigen Ausnehmung nimmt gleichzeitig der Mittelpunktswinkel ab.

Gemäß einem weiteren Beispiel (keine Ausführungsform der Erfindung) kann der Verschleißindikator als eine in der Bremsfläche versenkte Erhebung ausgeführt sein, die sich zur Bremsfläche hin konisch verjüngt, und der Referenzindikator kann eine die versenkte Erhebung konzentrisch umgebende Kante der Bremsfläche sein.

Gemäß diesem Beispiel wird mit abnehmender Verschleißhöhe die versenkte Erhebung schrittweise abgetragen und in einen Kegelstumpf mit abnehmender Höhe umgeformt, der in Draufsicht auf die Bremsfläche in Form eines breiter werdenden Kreises erscheint. Dabei nimmt der Abstand der oberen umlaufenden Kante des Kegelstumpfes zum Referenzindikator schrittweise ab und visualisiert dadurch den Verschleißzustand.

Die Bremsscheibe und die versenkte Erhebung können beispielsweise so ausgelegt werden, dass ein maximaler Verschleißzustand durch eine vollständige Annäherung des Kegelstumpfes an die die versenkte Erhebung konzentrisch umgebende Kante (Referenzindikator) gekennzeichnet ist. Damit ermöglicht auch dieses Beispiel, sowohl einen Neuzustand der Bremsscheibe, einen maximalen Verschleißzustand als auch den prozentualen Fortschritt des Verschleißes auf einfache Art visuell und ohne weitere Messmittel zu erkennen.

Gemäß einem weiteren Aspekt der Erfindung können auf der Bremsscheibe mehrere Verschleißindikatoren mit einem oder mehreren zugeordneten Referenzindikatoren gleichmäßig verteilt angeordnet sein. Dies hat den Vorteil, dass der Verschleißindikator besser durch die Handlöcher der Felge hindurch erkennbar ist, unabhängig von der Radstellung.

Gemäß einem weiteren Aspekt kann sich die Erscheinung des Referenzindikators in Draufsicht auf die Bremsscheibe linear über eine abnehmende Verschleißhöhe ändern. Dies ist besonders vorteilhaft für das Ablesen des Verschleißes, da sich eine lineare Änderung, d. h. eine konstante Steigung oder Formänderung des Verschleißindikators, leicht interpretieren bzw. extrapolieren lässt.

Ein weiterer Aspekt der Erfindung betrifft ein Fahrzeug, insbesondere ein Nutzfahrzeug, mit einer Bremsscheibe gemäß einem der vorstehend beschriebenen Aspekte.

Weitere Einzelheiten und Vorteile der Erfindung werden im Folgenden unter Bezug auf die beigefügten Zeichnungen beschrieben. Es zeigen:
- Figuren 1A bis 1C: eine Bremsscheibe gemäß einem ersten Ausführungsbeispiel in einem ersten Verschleißzustand;
- Figuren 2A bis 2C: eine Bremsscheibe gemäß dem ersten Ausführungsbeispiel in einem zweiten Verschleißzustand;
- Figuren 3A bis 3C: eine Bremsscheibe gemäß dem ersten Ausführungsbeispiel in einem dritten Verschleißzustand;
- Figuren 4A bis 4C: eine Bremsscheibe gemäß dem ersten Ausführungsbeispiel in einem vierten Verschleißzustand;
- Figuren 5A und 5B: eine Bremsscheibe gemäß einem zweiten Ausführungsbeispiel in einem ersten Verschleißzustand;
- Figuren 6A und 6B: eine Bremsscheibe gemäß dem zweiten Ausführungsbeispiel in einem zweiten Verschleißzustand;
- Figuren 7A und 7B: eine Bremsscheibe gemäß dem zweiten Ausführungsbeispiel in einem dritten Verschleißzustand;
- Figur 8: eine Bremsscheibe gemäß einem dritten Ausführungsbeispiel in einem ersten Verschleißzustand;
- Figur 9: eine Bremsscheibe gemäß dem dritten Ausführungsbeispiel in einem zweiten Verschleißzustand;
- Figur 10: eine Bremsscheibe gemäß dem dritten Ausführungsbeispiel in einem dritten Verschleißzustand;
- Figur 11: eine Bremsscheibe gemäß einem Beispiel (keine Ausführungsform der Erfindung) in einem ersten Verschleißzustand;
- Figur 12: eine Bremsscheibe gemäß dem Beispiel in einem zweiten Verschleißzustand;
- Figur 13: eine Bremsscheibe gemäß dem Beispiel in einem dritten Verschleißzustand;
- Figur 14: eine Bremsscheibe gemäß dem Beispiel in einem vierten Verschleißzustand; und
- Figuren 15A und 15B: schematisch das Einbringen eines Verschleißindikators in die Bremsscheibe.

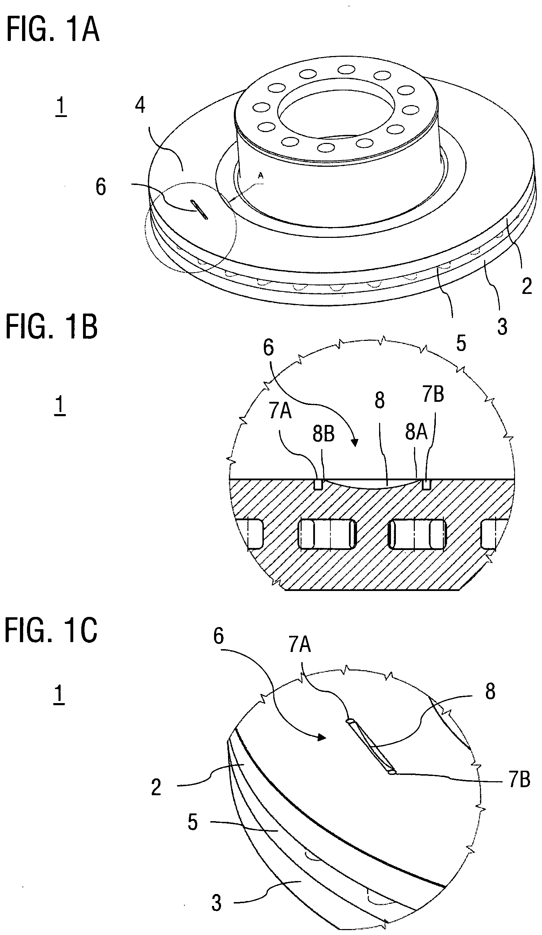

Figur 1A zeigt eine perspektivische Ansicht einer innenbelüfteten Bremsscheibe 1 mit zwei Bremsscheiben 2, 3, die über Stege parallel, aber beabstandet zueinander angeordnet sind. Über den Zwischenraum 5 erfolgt eine Luftkühlung der Bremsscheibe 1.

An zumindest einer Bremsfläche bzw. Reibfläche 4 ist eine visuell erkennbare Verschleißanzeige 6 vorgesehen. Der Bereich A in Figur 1A ist in der Schnittansicht der Figur 1B und der perspektivischen Ansicht der Figur 1C vergrößert dargestellt.

Die Verschleißanzeige 6 ist aus einem Verschleißindikator in Form einer trichterförmigen Ausnehmung 8 und einem Referenzindikator, bestehend aus zwei langlochförmigen Vertiefungen 7A und 7B, gebildet. Die Tiefe der langlochförmigen Vertiefungen 7A und 7B ist mindestens so groß wie die maximale Tiefe der trichterförmigen Vertiefung 8, so dass die Referenzindikatoren 7A und 7B auch in einem Zustand maximalen Verschleißes noch sichtbar sind.

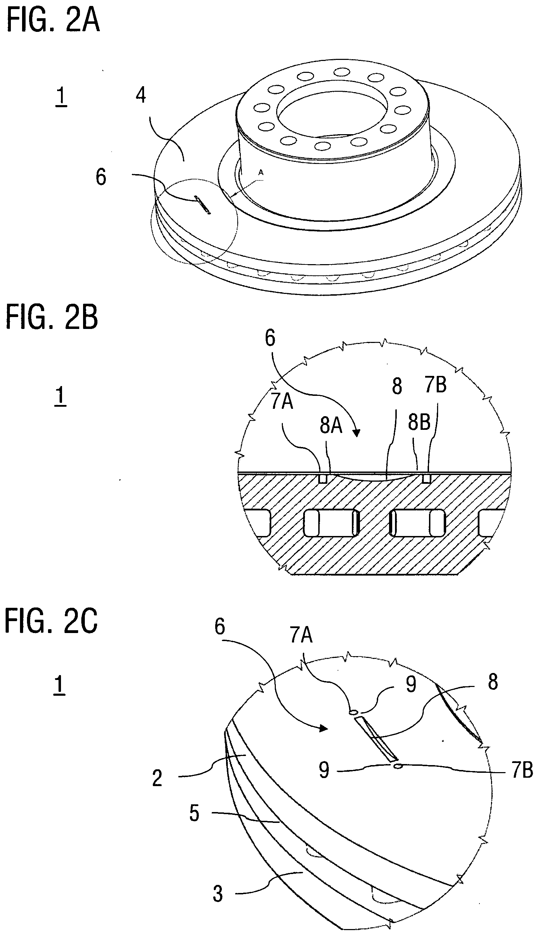

In Draufsicht erscheint die trichterförmige Vertiefung 8 als schlitzförmige Vertiefung. In der Querschnittsansicht der Figur 2B ist jedoch erkennbar, dass die Tiefe der Vertiefung zur Mitte hin zunimmt, also trichterförmig ausgebildet ist.

Die Figuren 1A bis 1C zeigen den Zustand der Bremsscheibe im Neuzustand, d. h. ohne Verschleiß. In diesem Zustand sind die beiden langlochförmigen Vertiefungen 7A und 7B angrenzend zu den beiden Endbereichen 8A, 8B der trichterförmigen Vertiefung 8 angeordnet. Erstreckt sich somit der in Draufsicht sichtbare Schlitz der trichterförmigen Vertiefung 8 bis zu den beiden langlochförmigen Vertiefungen 7A und 7B, kann der Verbraucher erkennen, dass sich die Bremsscheibe 1 noch im Neuzustand befindet.

Die Figuren 2A bis 2C illustrieren einen ersten Verschleißzustand, bei dem die Reibfläche 4 bereits teilweise durch Abnutzung verschlissen wurde. Folglich ist in der Draufsicht auf die Bremsscheibe 1 zu erkennen, dass sich die trichterförmige Vertiefung nicht mehr bis zu den langlochförmigen Vertiefungen 7A und 7B erstreckt. Zwischen dem Endbereich der langlochförmigen Vertiefung 8 und den Referenzindikatoren 7A und 7B ist ein Bereich 9 der Bremsfläche ohne Vertiefung freigelegt. Aus der Größe des Bereichs 9 bzw. aus dem Abstand der Endbereiche 8A, 8B des Verschleißindikators 8 zu den Referenzindikatoren 7A und 7B kann der Nutzer erkennen, wie weit der Verschleiß der Bremsscheibe bereits fortgeschritten ist.

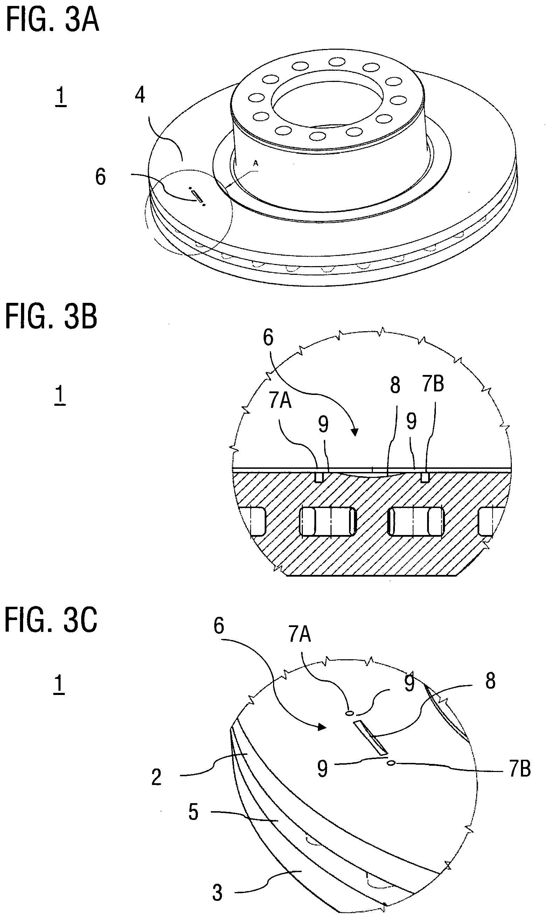

Die Figuren 3A bis 3C zeigen einen Zustand mit einem im Vergleich zu den Figuren 2A bis 2C höheren Verschleiß. Dies ist daran zu erkennen, dass der Bereich 9 im Vergleich zu den Figuren 2A bis 2C größer geworden ist, da eine weitere Oberflächenschicht der Bremsfläche 4 verschleißbedingt abgetragen wurde. Ferner ist in Figur 3B erkennbar, dass durch den Verschleiß der Bremsfläche 4 die trichterförmige Vertiefung in der vertikalen und der horizontalen Ausdehnung weiter verkleinert wurde.

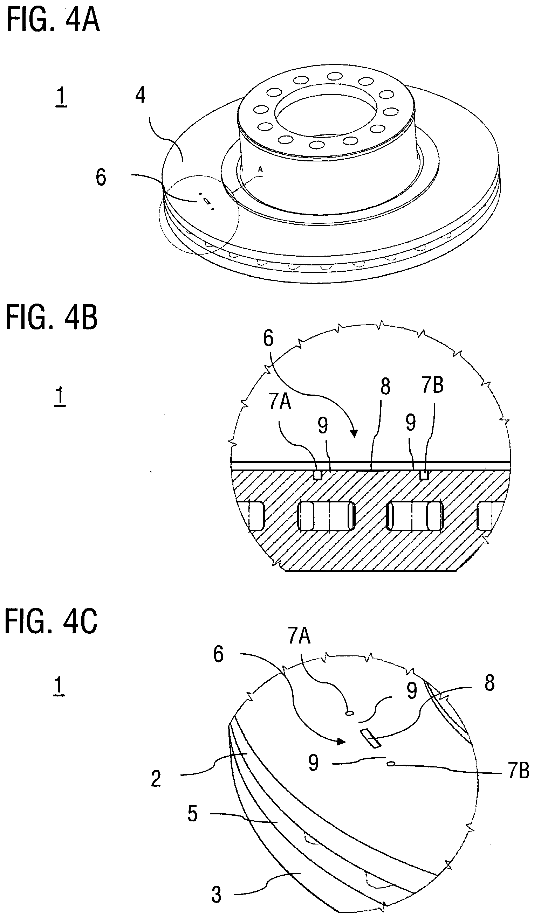

In vergleichbarer Weise ist in den Figuren 4A bis 4C ein Zustand mit noch höherem Verschleiß dargestellt, bei dem der Abstand der trichterförmigen Vertiefung 8 zu den Referenzindikatoren 7A und 7B noch größer wurde.

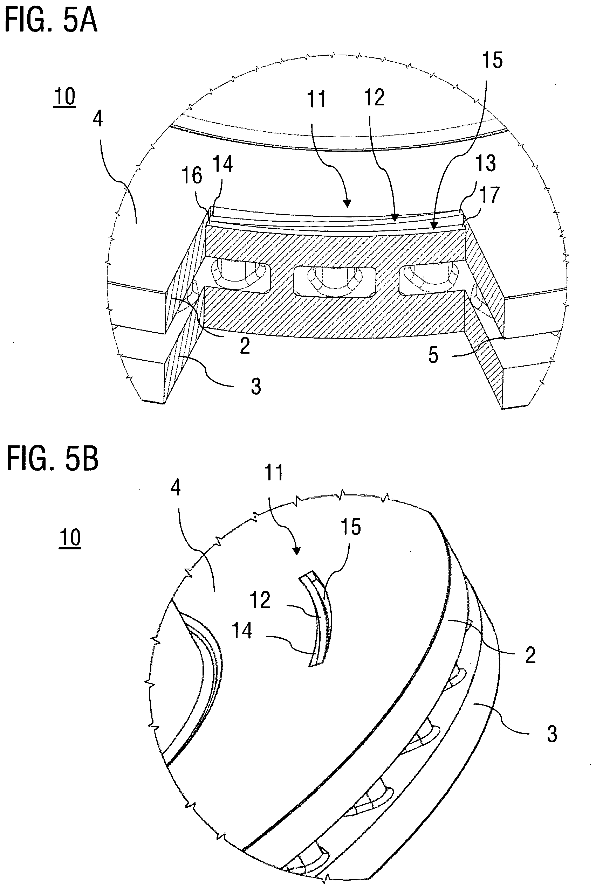

Figur 5A zeigt ein weiteres Ausführungsbeispiel einer Bremsscheibe 10 in einer vergrößerten Teilschnittansicht. Die visuell erkennbare Verschleißanzeige 11 ist in diesem Ausführungsbeispiel aus einem Verschleißindikator gebildet, der als rampenförmige Ausnehmung 12 der Bremsfläche 4 ausgeführt ist und aus einer nutförmige Ausnehmung 15, die parallel versetzt zu der rampenförmigen Ausnehmung 12 angeordnet ist. Die nutförmige Ausnehmung 15 hat eine konstante Tiefe, die der maximalen Tiefe der rampenförmigen Ausnehmung 12 entspricht. Die rampenförmige Ausnehmung 12 und die nutförmige Ausnehmung 15 sind im Neuzustand der Bremsscheibe, der in Figur 5A gezeigt ist, gleich lang, so dass die Anfangsstelle 13 der rampenförmigen Ausnehmung direkt benachbart zur Anfangsstelle 17 der nutförmigen Ausnehmung liegt. Gleiches gilt für die beiden Endstellen 14, 16 der beiden Ausnehmungen.

Figur 5B zeigt den Neuzustand in einer perspektivischen Draufsicht, wo erkennbar ist, dass die Erscheinung des Verschleißindikators 12 und des Referenzindikators 15 gleich ist, woraus der Nutzer schließen kann, dass sich die Bremsscheibe in einem Neuzustand bzw. in unverschlissenem Zustand befindet.

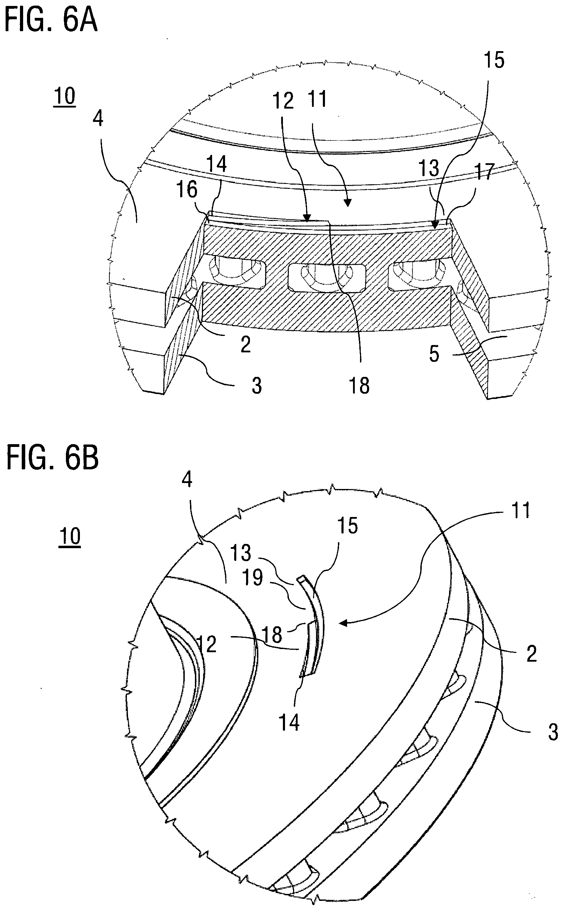

In den Figuren 6A und 6B ist ein Zustand mittleren Verschleißes dargestellt. In diesem Zustand wurde die Bremsfläche 4 bereits so weit verschlissen, dass bereits die Hälfte der rampenförmigen Vertiefung 12 abgetragen wurde. Hierdurch ist in einer Draufsicht auf die Bremsfläche 4 erkennbar, dass der Randbereich 18 des Verschleißindikators 12 zur Mitte des Referenzindikators 15 gewandert ist, so dass zwischen dem ursprünglichen Randbereich 13 und dem aktuellen Randbereich 18 die Oberfläche der Bremsfläche 4 ohne Vertiefung freigelegt ist. Der Zustand des Referenzindikators 15 ist unverändert.

Es ist weiter erkennbar, dass die Kombination aus dem Verschleißindikator 12 und dem Referenzindikator 15 ermöglicht, jeweils den aktuellen Verschleißzustand auf einfache Art und Weise visuell ohne weitere Hilfsmittel zu bestimmen, da ein Vergleich der Länge entlang der Bremsfläche 4 des verbleibenden Verschleißindikators 12 mit der unveränderten Länge der nutförmigen Vertiefung 15 den Fortschritt des Verschleißes anzeigt.

Bei dem in Figur 6B dargestellten Verschleißzustand kann beispielsweise aus der relativen Länge des verbleibenden Verschleißindikators 12 relativ zu der Länge der nutförmigen Vertiefung 15 geschlossen werden, dass die Bremsscheibe ungefähr zu Hälfte verschlissen ist. Hierzu ist es naturgemäß erforderlich, dass die Bremsscheibe und die Tiefen der nut- bzw. rampenförmigen Ausnehmungen so gebildet sind, dass die relativen Längen der Ausnehmungen den jeweiligen Verschleißzustand mit dem relativen Verschleißzustand korrelieren.

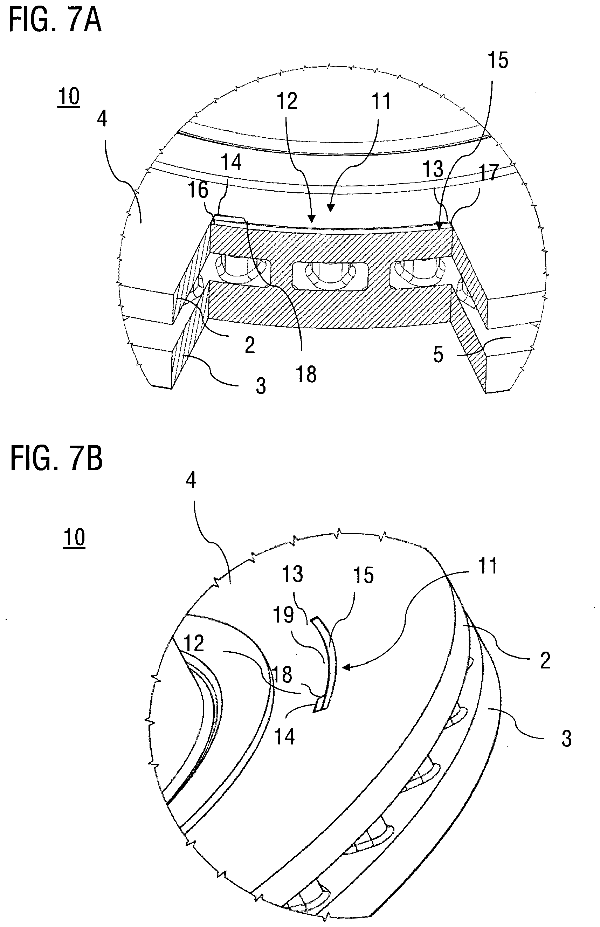

In den Figuren 7A und 7B ist ein dritter Verschleißzustand dargestellt, der einen Zustand noch höheren Verschleißes zeigt. Insbesondere ist ein Verschleißzustand gezeigt, der ein Wechseln der Bremsscheibe erforderlich macht, da die verbleibende Länge des Verschleißmerkmals klein ist zu der Länge des Referenzmerkmals. Der Endbereich des Verschleißmerkmals 18 ist fast bis zu dem gegenüberliegenden Endbereich 14 gewandert.

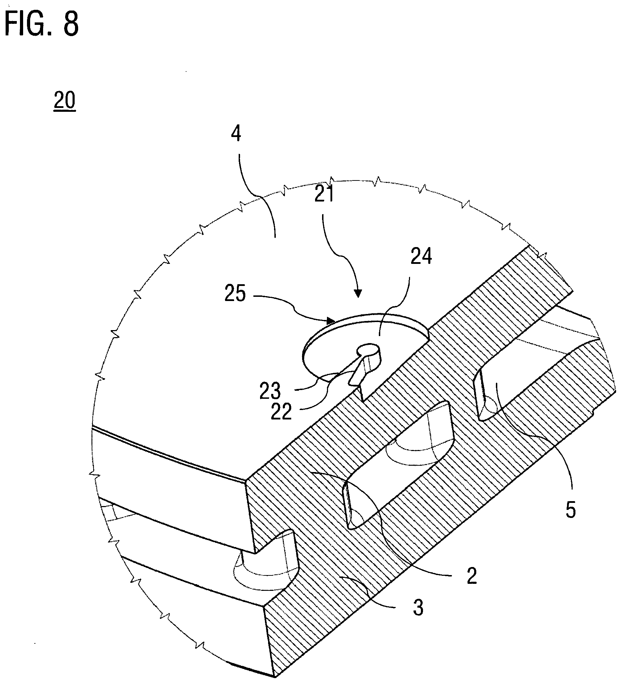

In Figur 8 ist eine weitere Ausführungsvariante einer Bremsscheibe 20 in einer vergrößerten Darstellung des Bereichs der Bremsfläche, an dem der Verschleißindikator und der Referenzindikator eingebracht sind, gezeigt. Gemäß dieser Variante ist der Verschleißindikator als helixförmige Ausnehmung 21 ausgeführt. Die helixförmige Ausnehmung 21 wird an einem Ende durch eine Kante 22, die ortsfest an der Bremsfläche 4 angeordnet und über alle Verschleißzustände sichtbar bleibt, begrenzt.

Eine weitere Kante 23 ändert sich jedoch mit zunehmenden Verschleißzustand und wandert im Uhrzeigersinn mit abnehmender Bogenlänge 25. Ausgehend von der Kante 23 erstreckt sich eine Fläche 24 spiralförmig in Verschleißrichtung geneigt bis zu der ortsfesten Kante 22.

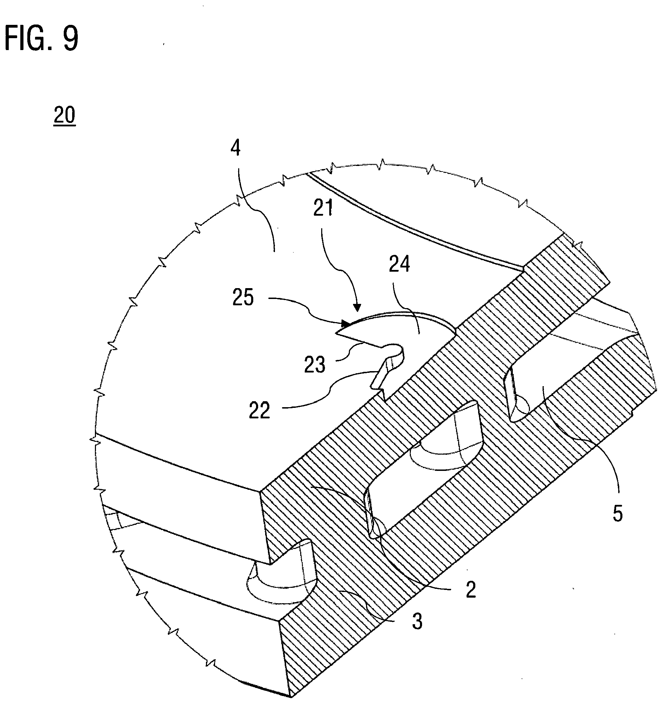

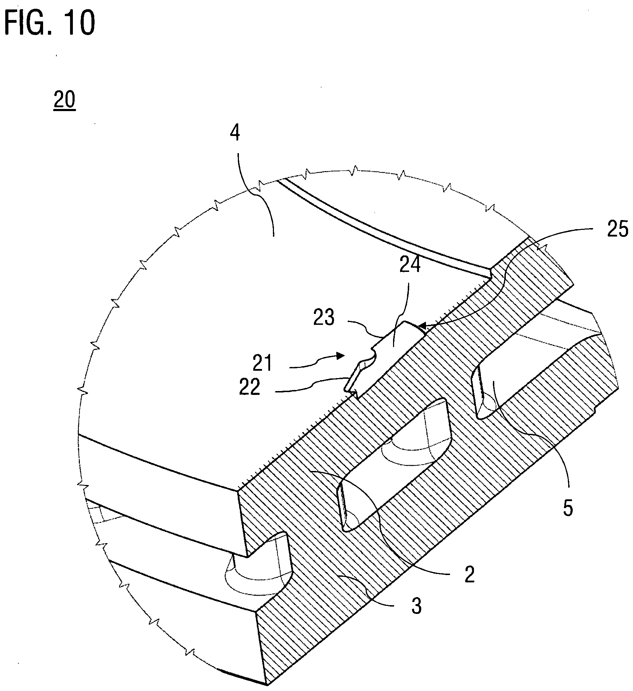

Dies ist den Figuren 9 und 10 dargestellt, die Zustände mit jeweils zunehmenden Verschleiß zeigen. Die helixförmige Ausnehmung bildet eine Selbstreferenz aus, da aus der sichtbaren Bogenlänge 25 bzw. an der relativen Lage der wandernden Kante 13 zu der Fixkante 22 der Fortschritt des Verschleißzustandes abgelesen werden kann. Ebenso kann aus dem Mittelpunktswinkel zwischen der Kante 23 und der Kante 22 der Verschleißzustand abgeleitet werden, da der Mittelpunktswinkel im Neuzustand fast 360° beträgt und mit zunehmenden Verschleiß kleiner wird. Die helixförmige Ausnehmung kann beispielsweise durch Festlegung der Steigung der Helix so eingebracht werden, dass die Kante 23 im Neuzustand der Bremsscheibe in der Position der Figur 8 angeordnet ist, bei 25 % Verschleiß an der Position der Figur 9, bei 50 % Verschleiß an der Position der Figur 10, etc..

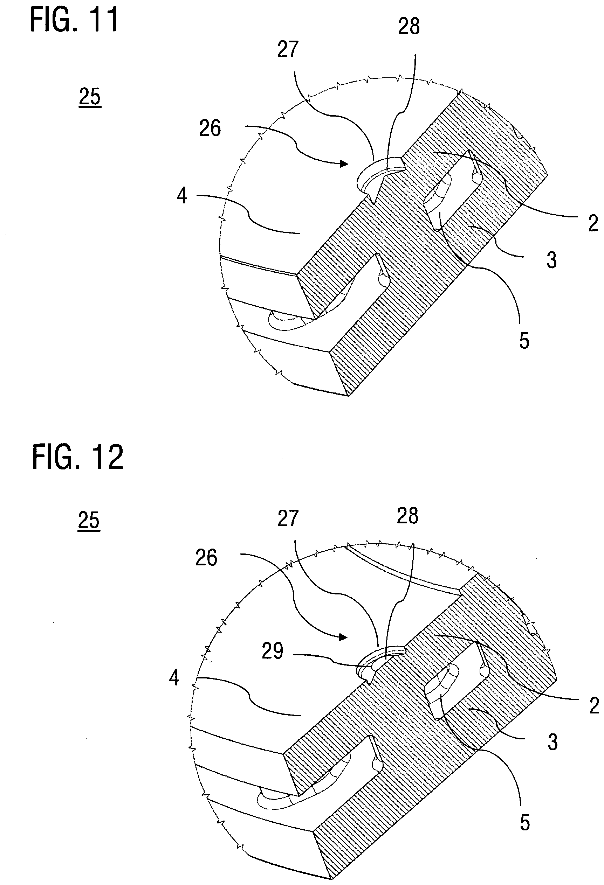

Figur 11 zeigt ein weiteres Beispiel einer Bremsscheibe 25 in einer vergrößerten Darstellung des Bereichs der Bremsfläche, an dem der Verschleißindikator und der Referenzindikator angebracht sind. Gemäß diesem Ausführungsbeispiel ist der Verschleißindikator als eine versenkte Erhebung 26 ausgeführt, die in die Bremsfläche 4 eingebracht ist. Die versenkte Erhebung 26 verjüngt sich zur Bremsfläche 4 hin konisch. Im Neuzustand der Bremsscheibe bildet die versenkte Erhebung 26 in dem Bereich 28 eine obere Spitze aus. Die versenkte Erhebung 26 ist konzentrisch von einer Kante 27 der Bremsfläche 24 umgeben, die gleichzeitig als Referenzindikator dient, was nachfolgend beschrieben ist.

In Figur 12 ist ein erster Verschleißzustand dargestellt, bei dem ein Teil der Bremsfläche 4 verschleißbedingt abgetragen wurde. Demzufolge wurde auch ein oberer Teil der Erhebung26 abgetragen, so dass die Erhebung nun kegelstumpfförmig ausgebildet ist. Die obere Spitze wurde abgetragen und erscheint in Draufsicht als Kreisfläche 28.

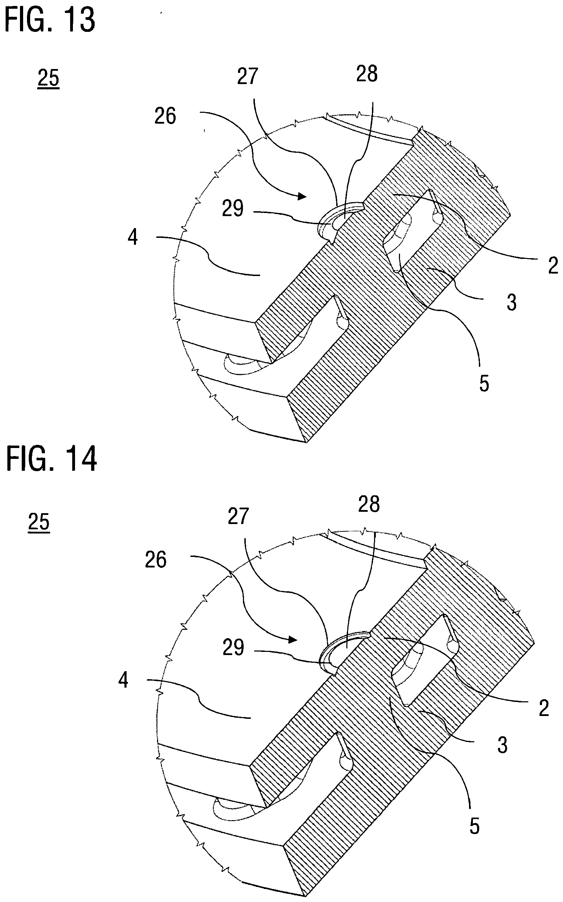

In den Figuren 13 und 14 sind jeweils weitere Verschleißzustände dargestellt, wobei der Verschleißzustand in Figur 14 am größten ist. Hieraus ist erkennbar, dass mit zunehmendem Verschleiß die Höhe des Kegelstumpfes der Erhebung 26 abnimmt und sich dadurch die obere Kreisfläche 28 vergrößert. Dadurch verringert sich der Abstand der Umlaufkante 29 der Kreisfläche zur Referenzkante 27. Die beiden Kanten 29 und 27 nähern sich somit mit zunehmendem Verschleiß an.

Aus dem Vergleich der beiden Radien der Kanten 29 und 27 bzw. aus dem Abstand der Kreiskante 29 zu der konzentrisch angeordneten Kreiskante 27 kann der Fortschritt des Verschleißes abgeleitet werden. Je kleiner der Abstand der Kante 29 zu der Referenzkante 27 bzw. je kleiner das Verhältnis des Radius der Kreiskante 29 zum Radius der Kreiskante 27, desto größer der Verschleißzustand. Somit ermöglicht auch diese Ausführungsform ein visuell einfaches Erkennen des Neuzustandes der Bremsscheibe, des maximalen Verschleißzustandes und des Fortschritts des Verschleißes anhand der Zwischenzustände.

Die beispielhaft beschriebenen Ausführungsvarianten zeigen, dass der Nutzer durch Vergleich des Verschleißindikators mit dem Referenzindikator den Verschleißzustand erkennen kann. Der Nutzer kann insbesondere nicht nur den Anfangs- und Endzustand des Verschleißes genau bestimmen, sondern auch den prozentualen Fortschritt des Verschleißes einfach und ohne weitere Hilfsmittel erkennen. Insbesondere genügt zur Ermittlung des Verschleißzustandes ein Blick durch die Handlöcher der Felge, so dass keine Demontage des Reifens erforderlich ist.

Die zuvor beschriebenen Varianten zur Ausbildung einer visuell erkennbaren Verschleißanzeige können auf unterschiedliche Weise hergestellt werden.

Die Verschleißindikatoren und Referenzindikatoren können schon im Gussprozess eingebracht werden. Beim Zerspanen des Rohlings werden die Indikatoren dann als Referenzpunkte genommen, zu denen die nachfolgende Bearbeitung ausgerichtet ist. Vorteilhaft hierbei ist es besonders, wenn die Verschleißindikatoren und Referenzindikatoren dann auch den direkten Zusammenhang des Abstands zur Kühlkanal-Reibfläche wiederspiegeln, was bezüglich Festigkeit relevant ist und das kritische Maß noch genauer definiert. Alternativ können die Verschleißmerkmale spanend, z. B. durch Bohren oder Fräsen, eingebracht werden.

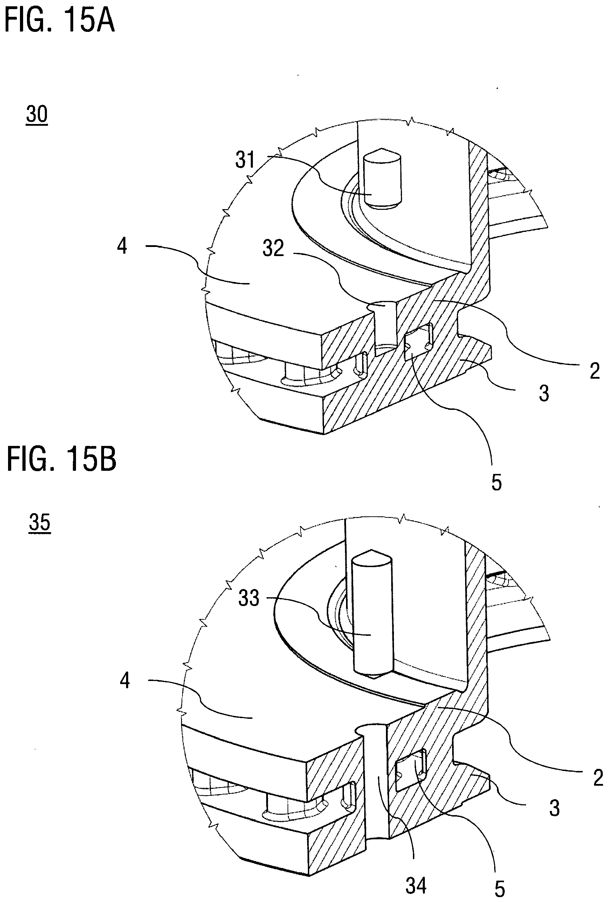

In einer weiteren Ausführungsform der Erfindung können in den Bremsscheiben 30, 35 definierte Ausnehmungen wie z. B. Taschen 32 bzw. 34 vorgesehen sein, was in den Figuren 15A oder 15B dargestellt ist. In diese Taschen 32 bzw. 34 können die Verschleißmerkmale nachträglich fixiert werden, beispielsweise eingepresst, aufgeschweißt oder eingeschraubt werden. Die Verschleißmerkmale selbst können dann in einem eigenen Verfahren hergestellt werden. Alternativ können auch umformende Maßnahmen zum Einbringen des Merkmals verwendet werden.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1, 10, 20, 25, 35: Bremsscheibe
- 2,3: Bremsscheibe
- 4: Bremsfläche
- 5: Zwischenraum zur Kühlung
- 6, 11: Visuell erkennbare Verschleißanzeige
- 7A, 7B: Langlochförmige Vertiefung
- 8: Trichterförmige Vertiefung
- 9: Bereich zwischen langlochförmiger Vertiefung und trichterförmiger Vertiefung
- 12: Rampenförmige Vertiefung
- 13: Anfangsbereich
- 14: Endbereich
- 15: Nutförmige Vertiefung
- 16: Anfangsbereich
- 17: Endbereich
- 18: Wandernder Endbereich
- 19: Freigelegte Oberfläche der Bremsfläche
- 21: Helixförmige Ausnehmung
- 22: Referenzkante
- 23: Wandernder Kante
- 24: Spiralförmige Fläche
- 26: Versenkte Erhebung
- 27: Referenzkante
- 28: Sichtbare Erhebung
- 29: Umlaufkante der sichtbaren Erhebung
- 31, 33: Verschleißindikator oder Referenzindikator
- 32, 34: Einbringtasche

## Patentansprüche

1. Bremsscheibe (1; 10; 20; 25) für ein Fahrzeug, umfassend
einen Verschleißindikator (8; 12; 21; 26), der in eine Bremsfläche (4) der Bremsscheibe eingebracht und so ausgeführt ist, dass sich dessen Erscheinung in Draufsicht auf die Bremsfläche über eine abnehmende Verschleißhöhe ändert; und
einen Referenzindikator (7A, 7B; 15; 22; 27), der in die Bremsfläche (4) der Bremsscheibe eingebracht und so ausgeführt ist, dass sich dessen Erscheinung in Draufsicht auf die Bremsfläche über die abnehmende Verschleißhöhe nicht ändert oder relativ zur Änderung des Verschleißindikators in vorgegebener Weise unterschiedlich ändert, so dass ein Verschleißfortschritt aus der Erscheinung des Verschleißindikators (8; 12; 21; 26) in Relation zu der Erscheinung des Referenzindikators (7A, 7B; 15; 22; 27) ablesbar ist,
**dadurch gekennzeichnet**,
*(Variante i)*
i_a) dass der Verschleißindikator als rampenförmige Ausnehmung (12) gebildet ist; und
i_b) dass der Referenzindikator als nutförmige Ausnehmung (15) gebildet ist, die parallel und benachbart zur der rampenförmigen Ausnehmung (12) verläuft, wobei eine Tiefe der nutförmigen Ausnehmung (15) in Verschleißrichtung vorzugsweise mindestens so groß ist wie die maximale Tiefe der rampenförmigen Ausnehmung (12); und
i_c) dass die rampenförmige Ausnehmung (12) und die nutförmige Ausnehmung (15) im Neuzustand der Bremsscheibe (10) an einer gleichen Anfangsstelle (13, 17) beginnen und einer gleichen Endstelle (14, 16) enden,
oder
*(Variante ii)*
ii_a) dass der Verschleißindikator als rampenförmige Ausnehmung gebildet ist; und
ii_b) dass der Referenzindikator als Ausnehmung gebildet ist, die unter einem Winkel zwischen 0° und 180° und benachbart zur der rampenförmigen Ausnehmung angeordnet ist, wobei eine Tiefe der Ausnehmung in Verschleißrichtung vorzugsweise mindestens so groß ist wie die maximale Tiefe der rampenförmigen Ausnehmung; und
ii_c) dass die rampenförmige Ausnehmung und die Ausnehmung im Neuzustand der Bremsscheibe an einer gleichen Anfangsstelle beginnen;
oder
*(Variante iii)*
iii_a) dass der Verschleißindikator als trichterförmige Ausnehmung (8) gebildet ist; und
iii_b) dass der Referenzindikator zwei Vertiefungen (7A, 7B) umfasst, wobei eine Tiefe der Vertiefungen (7A, 7B) vorzugsweise mindestens so groß ist wie die maximale Tiefe der trichterförmigen Ausnehmung (6); und
iii_c) wobei die Vertiefungen (7A, 7B) im Neuzustand der Bremsscheibe (1) angrenzend zu oder in unmittelbarer Nähe zu gegenüberliegenden Randbereichen (8A, 8B) der trichterförmigen Ausnehmung (8) angeordnet sind;
oder
*(Variante iv)*
iv_a) dass der Verschleißindikator als helixförmige Ausnehmung (21) gebildet ist, wobei eine Bogenlänge (25) der helixförmigen Ausnehmung (21) auf der Bremsfläche (4) mit abnehmender Verschleißhöhe abnimmt; und
iv_b) dass der Referenzindikator eine radiale Kante (22) der helixförmigen Ausnehmung (21) ist, deren Lage mit abnehmender Verschleißhöhe unverändert ist, oder dass der Referenzindikator die Bogenlänge (25) ist.

2. Bremsscheibe nach Anspruch 1, **dadurch gekennzeichnet, dass** der Verschleißindikator (8; 12; 21; 26) und der Referenzindikator (7A, 7B; 15; 22; 27) so ausgeführt sind, dass sich eine in Draufsicht auf die Bremsfläche sichtbare Lage, Form und/oder Abmessung des Verschleißindikators (8; 12; 21; 26) relativ zu einer sichtbaren Lage, Form und/oder Abmessung des Referenzindikators (7A, 7B; 15; 22; 27) über die abnehmende Verschleißhöhe in vorgegebener Weise ändern.

3. Bremsscheibe nach Anspruch 1 oder 2, **dadurch gekennzeichnet,**
a) **dass** der Verschleißindikator (12) und der Referenzindikator (15) gemäß der Variante i) ausgeführt sind, derart,
b) **dass** eine Form und Orientierung des Referenzindikators (15) so ausgeführt sind, dass sie einer Form und Orientierung des Verschleißindikators (12) in Draufsicht auf die Bremsfläche entsprechen; und
c) **dass** der Referenzindikator (15) angrenzend zu oder in unmittelbarer Nähe zu dem Verschleißindikator angeordnet (12) ist.

4. Bremsscheibe nach Anspruch 1 oder 2, **dadurch gekennzeichnet,**
a) **dass** der Referenzindikator in Form einer Erhebung, Ausnehmung oder Kante ausgebildet ist, die über die abnehmende Verschleißhöhe sichtbar bleibt; und
b) **dass** der Referenzindikator an einer Stelle der Bremsfläche angeordnet ist, an der der Referenzindikator im Neuzustand der Bremsscheibe angrenzend zu oder in unmittelbarer Nähe zu einem sich mit abnehmender Verschleißhöhe wandernden Bereich des Verschleißindikators ist.

5. Bremsscheibe nach einem der vorhergehenden Ansprüche, **dadurch gekennzeichnet, dass** auf der Bremsscheibe mehrere Verschleißindikatoren mit einem oder mehreren zugeordneten Referenzindikatoren gleichmäßig verteilt angeordnet sind.

6. Bremsscheibe nach einem der vorhergehenden Ansprüche, **dadurch gekennzeichnet, dass** sich die Erscheinung des Referenzindikators in Draufsicht auf die Bremsfläche linear über eine abnehmende Verschleißhöhe ändert.

7. Fahrzeug, insbesondere Nutzfahrzeug, mit einer Bremsscheibe (1; 10; 20; 25) nach einem der vorhergehenden Ansprüche 1 bis 6.

## Claims

1. Brake disc (1; 10; 20; 25) for a vehicle, comprising
a wear indicator (8; 12; 21; 26) which is inserted into a braking surface (4) of the brake disc and is embodied such that its appearance in a top view of the braking surface changes across a reducing level of wear; and
a reference indicator (7A, 7B; 15; 22; 27) which is inserted into the braking surface (4) of the brake disc and is embodied such that its appearance in a top view of the braking surface does not change across the reducing level of wear or changes differently in a specified manner relative to the change in the wear indicator so that wear progression can be read off from the appearance of the wear indicator (8; 12; 21; 26) in relation to the appearance of the reference indicator (7A, 7B; 15; 22; 27),
**characterized in that**
(variant i)
i_a) that the wear indicator is formed as a ramp-shaped recess (12); and
i_b) that the reference indicator is formed as a groove-shaped recess (15) which runs parallel and adjacent to the ramp-shaped recess (12), wherein a depth of the groove-shaped recess (15) in the direction of wear is preferably at least as large as the maximum depth of the ramp-shaped recess (12); and
i_c) that the ramp-shaped recess (12) and the groove-shaped recess (15), in the new state of the brake disc (10), begin at an identical starting point (13, 17) and end at an identical end point (14, 16),
or
(variant ii)
ii_a) that the wear indicator is formed as a ramp-shaped recess; and
ii_b) that the reference indicator is formed as a recess which is arranged at an angle between 0° and 180° and adjacent to the ramp-shaped recess, wherein a depth of the recess in the direction of wear is preferably at least as large as the maximum depth of the ramp-shaped recess; and
ii_c) that the ramp-shaped recess and the recess, in the new state of the brake disc, begin at an identical starting point;
or
(variant iii)
iii_a) that the wear indicator is formed as a funnel-shaped recess (8); and
iii_b) that the reference indicator comprises two depressions (7A, 7B), wherein a depth of the depressions (7A, 7B) is preferably at least as large as the maximum depth of the funnel-shaped recess (6); and
iii_c) wherein the depressions (7A, 7B), in the new state of the brake disc (1), are arranged adjacent to or in the direct vicinity of the opposite edge regions (8A, 8B) of the funnel-shaped recess (8);
or
(variant iv)
iv_a) that the wear indicator is formed as a helical recess (21), wherein an arc length (25) of the helical recess (21) on the braking surface (4) reduces with a reducing level of wear; and
iv_b) that the reference indicator is a radial edge (22) of the helical recess (21), the position of which is changed with a reducing level of wear, or that the reference indicator is the arc length (25).

2. Brake disc according to Claim 1, **characterized in that** the wear indicator (8; 12; 21; 26) and the reference indicator (7A, 7B; 15; 22; 27) are embodied such that a position which is visible in a top view of the braking surface, shape, and/or dimension of the wear indicator (8; 12; 21; 26) change relative to a visible position, shape, and/or dimension of the reference indicator (7A, 7B; 15; 22; 27) across the reducing level of wear in a specified manner.

3. Brake disc according to Claim 1 or 2, **characterized in**
a) **that** the wear indicator (12) and the reference indicator (15) are embodied according to variant i) such
b) **that** a shape and orientation of the reference indicator (15) are embodied such that they correspond to a shape and orientation of the wear indicator (12) in a top view of the braking surface; and
c) **that** the reference indicator (15) is arranged adjacent to or in the direct vicinity of the wear indicator (12).

4. Brake disc according to Claim 1 or 2, **characterized in**
a) **that** the reference indicator is formed in the shape of an elevation, recess or edge which remains visible across the reducing level of wear; and
b) **that** the reference indicator is arranged at a point of the braking surface at which the reference indicator, in the new state of the braking disc, is adjacent to in the direct vicinity of a region of the wear indicator, which region migrates with the reducing level of wear.

5. Brake disc according to one of the preceding claims, **characterized in that** several wear indicators with one or more assigned reference indicators are arranged distributed evenly on the brake disc.

6. Brake disc according to one of the preceding claims, **characterized in that** the appearance of the reference indicator in a top view of the braking surface changes linearly across a reducing level of wear.

7. Vehicle, in particular commercial vehicle, with a brake disc (1; 10; 20; 25) according to one of preceding Claims 1 to 6.

## Revendications

1. Disque de frein (1 ; 10 ; 20 ; 25) pour un véhicule, comprenant :
un indicateur d'usure (8 ; 12 ; 21 ; 26) qui est introduit dans une surface du frein (4) du disque de frein et qui est réalisé de telle sorte que son aspect en vue de dessus sur la surface du frein varie sur une hauteur d'usure décroissante ; et
un indicateur de référence (7A, 7B ; 15 ; 22 ; 27) qui est introduit dans la surface du frein (4) du disque de frein et qui est réalisé de telle sorte que son aspect en vue de dessus sur la surface du frein ne varie pas sur la hauteur d'usure décroissante ou varie de manière prédéfinie différemment par rapport à la variation de l'indicateur d'usure de telle sorte qu'une progression de l'usure puisse être mise en évidence à partir de l'aspect de l'indicateur d'usure (8 ; 12 ; 21 ; 26) par rapport à l'aspect de l'indicateur de référence (7A, 7B ; 15 ; 22 ; 27),
**caractérisé en ce que**
*(variante i)*
i_a) l'indicateur d'usure est réalisé sous forme d'évidement en forme de rampe (12) ; et
i_b) l'indicateur de référence est réalisé sous forme d'évidement en forme de rainure (15) qui s'étend parallèlement et à côté de l'évidement en forme de rampe (12), une profondeur de l'évidement en forme de rainure (15) dans la direction d'usure étant de préférence au moins aussi grande que la profondeur maximale de l'évidement en forme de rampe (12) ; et
i_c) l'évidement en forme de rampe (12) et l'évidement en forme de rainure (15), à l'état neuf du disque de frein (10), commencent à un emplacement initial identique (13, 17) et se terminent à un emplacement final identique (14, 16),
ou
*(variante ii)*
ii_a) l'indicateur d'usure est réalisé en forme d'évidement en forme de rampe ; et
ii_b) l'indicateur de référence est réalisé en forme d'évidement qui est disposé suivant un angle compris entre 0° et 180° et de manière adjacente à l'évidement en forme de rampe, une profondeur de l'évidement dans la direction d'usure étant de préférence au moins aussi grande que la profondeur maximale de l'évidement en forme de rampe ; et
ii_c) l'évidement en forme de rampe et l'évidement à l'état neuf du disque de frein commençant à un emplacement initial identique ;
ou
*(Variante iii)*
iii_a) l'indicateur d'usure est réalisé sous forme d'évidement en forme d'entonnoir (8) ; et
iii_b) l'indicateur de référence comprend deux renfoncements (7A, 7B), une profondeur des renfoncements (7A, 7B) étant de préférence au moins identique à la profondeur maximale de l'évidement en forme d'entonnoir (6) ; et
iii_c) les renfoncements (7A, 7B) à l'état neuf du disque de frein (1) sont disposés en position adjacente aux, ou à proximité immédiate des, régions de bord opposées (8A, 8B) de l'évidement en forme d'entonnoir (8) ;
ou
*(Varianten iv)*
iv_a) l'indicateur d'usure est réalisé sous forme d'évidement en forme d'hélice (21), une longueur d'arc (25) de l'évidement en forme d'hélice (21) sur la surface du frein (4) diminuant avec l'augmentation de la hauteur d'usure ; et
iv_b) l'indicateur de référence est une arête radiale (22) de l'évidement en forme d'hélice (21), dont la position est invariante lorsque la hauteur d'usure décroît, ou **en ce que** l'indicateur de référence est la longueur d'arc (25).

2. Disque de frein selon la revendication 1, **caractérisé en ce que** l'indicateur d'usure (8 ; 12 ; 21 ; 26) et l'indicateur de référence (7A, 7B ; 15 ; 22 ; 27) sont réalisés de telle sorte qu'une position, une forme et/ou une dimension de l'indicateur d'usure (8 ; 12 ; 21 ; 26), visibles en vue de dessus sur la surface du frein, par rapport à une position, une forme et/ou une dimension visibles de l'indicateur de référence (7A, 7B ; 15 ; 22 ; 27), varient de manière prédéfinie sur la hauteur d'usure décroissante.

3. Disque de frein selon la revendication 1 ou 2, **caractérisé en ce que**
a) l'indicateur d'usure (12) et l'indicateur de référence (15) sont réalisés selon la variante i), de telle sorte que
b) une forme et une orientation de l'indicateur de référence (15) soient réalisées de telle sorte qu'elles correspondent à une forme et une orientation de l'indicateur d'usure (12) en vue de dessus sur la surface du frein ; et
c) l'indicateur de référence (15) est disposé en position adjacente à, ou à proximité immédiate de, l'indicateur d'usure (12).

4. Disque de frein selon la revendication 1 ou 2, **caractérisé en ce que**
a) l'indicateur de référence est réalisé sous forme de rehaussement, d'évidement ou d'arête qui reste visible sur la hauteur d'usure décroissante ; et
b) l'indicateur de référence est disposé à un emplacement de la surface du frein au niveau duquel l'indicateur de référence à l'état neuf du disque de frein est adjacent à ou est à proximité immédiate d'une région de l'indicateur d'usure variant avec la hauteur d'usure décroissante.

5. Disque de frein selon l'une quelconque des revendications précédentes, **caractérisé en ce que** sur le disque de frein sont disposés de manière répartie uniformément plusieurs indicateurs d'usures avec un ou plusieurs indicateurs de référence associés.

6. Disque de frein selon l'une quelconque des revendications précédentes, **caractérisé en ce que** l'aspect de l'indicateur de référence en vue de dessus sur la surface du frein varie linéairement sur une hauteur d'usure décroissante.

7. Véhicule, en particulier véhicule utilitaire, comprenant un disque de frein (1 ; 10 ; 20 ; 25) selon l'une quelconque des revendications 1 à 6.
